Europäisches Patentamt

**European Patent Office**

**Office européen des brevets**

(19)

(11) Publication number: **0 134 733**
**A1**

(12) # EUROPEAN PATENT APPLICATION

(21) Application number: **84401473.8**

(22) Date of filing: **11.07.84**

(51) Int. Cl.⁴: **G 11 B 23/023**

(30) Priority: **12.07.83 JP 126328/83**
**09.09.83 JP 165897/83**

(43) Date of publication of application:
**20.03.85 Bulletin 85/12**

(84) Designated Contracting States:
**CH DE FR GB LI**

(71) Applicant: **IDESHIGE SHIKO KABUSHIKI KAISHA**
**45-1, Nishiogu 8-chome Arakawa-ku**
**Tokyo(JP)**

(72) Inventor: **Detani, Tsuguo**
**45-1, Nishiogu 8-chome**
**Arakawa-Ku Tokyo(JP)**

(74) Representative: **Cabinet BERT, DE KERAVENANT &**
**HERRBURGER**
**115, Boulevard Haussmann**
**F-75008 Paris(FR)**

(54) **Cassette tape holder.**

(57) A cassette tape holder provided with flexible tongue pieces (4) each formed to be substantially as wide as or narrower than an opening (1d) on the bottom surface of a cassette tape case body (1a), inserted into the cassette tape case through the above mentioned opening and further having holes (4a, 4b) engaging respectively with positioning projections (1f, 1g) provided on the bottom surface of the above mentioned cassette tape case body.

FIG. 1

Croydon Printing Company Ltd.

SPECIFICATION

Title of the Invention:

CASSETTE TAPE HOLDER

## Field of the Invention

This invention relates to a cassette tape holder wherein cassette tapes as contained respectively in cases can be simply arranged, the cassette tapes can be taken out and contained in the respective cases and the cases can be simply fitted and removed and which can be utilized as an album and to be displayed at a store and to be hung on a wall surface within a room or car.

## Background of the Invention

A molding of a plastic (such as a foamed styrol or vinyl chloride) having recesses each in the form of a cassette tape case has been already provided to arrange cassette tapes. However, there have been defects therein that it is difficult to take out only the tapes and to arrange them and the molding is difficult to make, is thick and bulky, is costly to transport and is expensive.

The present invention is made to eliminate such defects as are mentioned above and is a cassette tape holder provided with flexible tongue pieces each

- 1 -

inserted into a cassette tape case through an opening on the bottom surface of the case body and having holes engaging respectively with positioning projections provided on the bottom surface of the above mentioned case body so that the cassette tapes as contained in the respective cases can be very simply arranged, the cassette tapes only can be simply taken out and no other particular holding parts than the above mentioned tongue pieces are required to be provided and therefore the cassette tape holder is very easy to make and is cheap to provide.

<div align="center">Summary of the Invention</div>

The present invention is a cassette tape holder provided with flexible tongue pieces each inserted into a cassette tape case through an opening on the bottom surface of the case body and having holes engaging respectively with positioning projections provided on the bottom surface of the above mentioned case body.

<div align="center">Brief Description of the Drawings</div>

Fig. 1 is a general perspective view of an embodiment made in an album type.

Fig. 2 is a sectioned view on line A-A in Fig. 1.

Fig. 3 is a perspective view of a cassette

<div align="center">- 2 -</div>

tape case.

Fig. 4 is a perspective view showing another embodiment.

Fig. 5 is an elevation as displayed at a store.

Figs. 6 and 7 are perspective views of other embodiments.

### Detailed Description of the Invention

An embodiment of the present invention shall be described in detail in the following.

First of all, a case 1 of a casette tape T shall be described. The case 1 is standardized, a case body 1a and a lid 1b are fitted to each other through pins 2 so as to be free to open and close. The above mentioned pin 2 side of the bottom surface 1c of the case body 1a is cut off to form an opening 1d. On the other hand, a receiving piece 1e which will substantially close the above mentioned opening 1d and will become horizontal with the bottom surface 1c of the case body 1a when the cassette tape T is received and the lid 1d is closed is formed in the lid 1b.

Further, positioning projections 1f and 1g fitting reeling holes of the cassette tape T are provided on the bottom surface 1c of the case body 1a.

In the present invention, the opening 1d and positioning projections 1f and 1g provided on the

- 3 -

bottom surface 1c of the body 1a of the above mentioned case 1 are utilized.

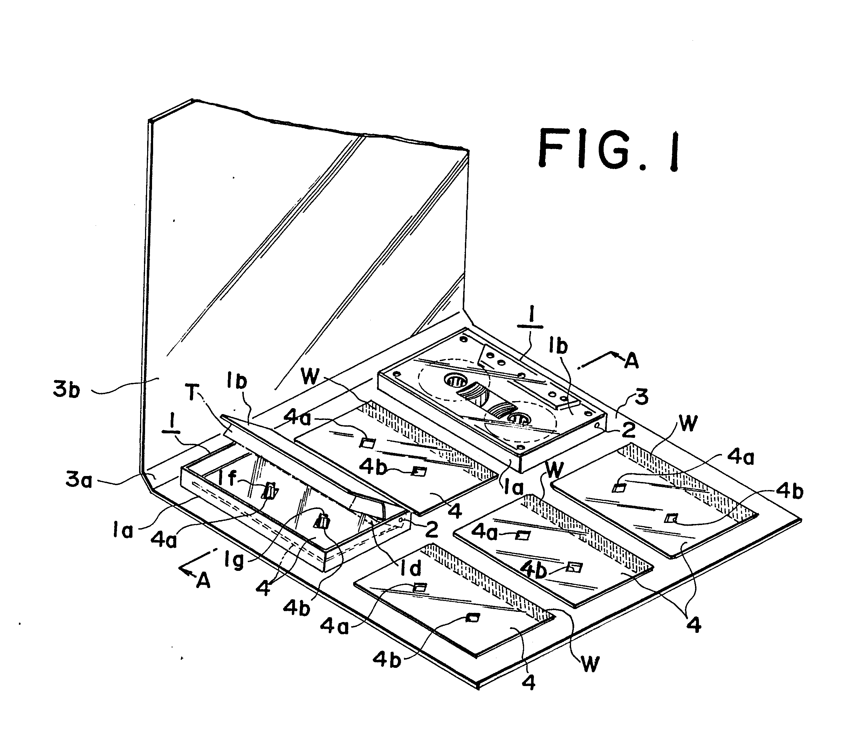

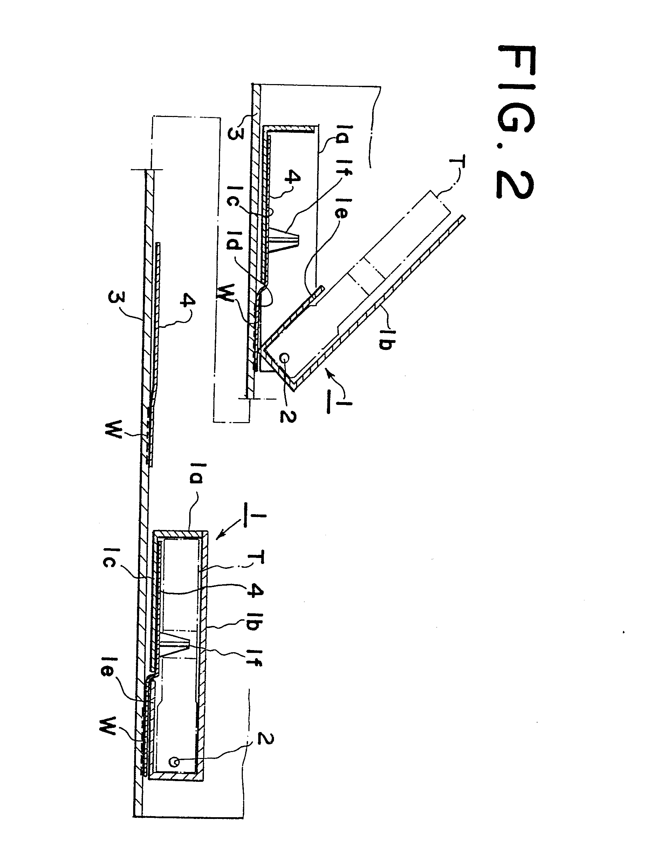

Figs. 1 and 2 show an embodiment formed in an album type so that cassette tapes can be arranged the same as books on a book shelf.

That is to say, a back cover 3a and front cover 3b are integrally provided on a base plate 3 which is to be a holder.

In the present invention, flexible tongue pieces 4 each to be inserted into the above mentioned case 1 through the opening 1d on the bottom surface 1c of the case body 1a are provided at proper intervals on the above mentioned base plate 3.

That is to say, the tongue piece 4 is formed of a plastic film, paper or cloth to be substantially as wide as or narrower than the opening 1d of the above mentioned case 1 and is fixed at the upper end to the base plate 3 by bonding or welding W.

Further, in the above mentioned tongue piece 4, holes 4a and 4b are formed in advance respectively in the positions fitting the positioning projections 1f and 1g provided on the bottom surface of the case body 1a when the tongue piece 4 is inserted into the case 1 through the opening 1d. That is to say, in the present invention, the flexible tongue pieces 4 of the above mentioned formation may well be only fixed to the base plate 3. By the way, the above mentioned holes 4a and 4b may be circular or may only be cut to be cruciform.

The use of the present invention shall be described in the following.

As shown in Fig. 2, when the lid 1b of the case 1 is opened, the opening 1d on the bottom surface 1c of the case body 1a will be opened.

Then, the above mentioned tongue piece 4 is inserted through the above mentioned opening 1d and the holes 4a and 4b are fitted and locked with the positioning projections 1f and 1g provided on the bottom surface 1c of the case body.

Thereafter, when the lid 1b is closed, the tongue piece 4 will be pressed between the receiving piece 1e formed in the lid 1b and the base plate 3, between the receiving piece 1e of the lid 1b and the bottom surface 1c of the case body 1a and further between the cassette tape T and the bottom surface 1c of the case body 1a so that the case 1 will never be pulled off.

Then, even if the lid 1b is opened to take out the cassette tape T, the holes 4a and 4b of the flexible tongue piece 4 will remain locked respectively

- 5 -

with the positioning projections 1f and 1g provided on the bottom surface 1c of the case body 1a, the case 1 will not drop and the cassette tape T only will be able to be taken out.

In case the case 1 is to be taken out to carry the cassette tape T, the holes 4a and 4b of the tongue piece 4 may be removed respectively from the positioning projections 1f and 1g provided on the bottom surface 1c of the case body 1a.

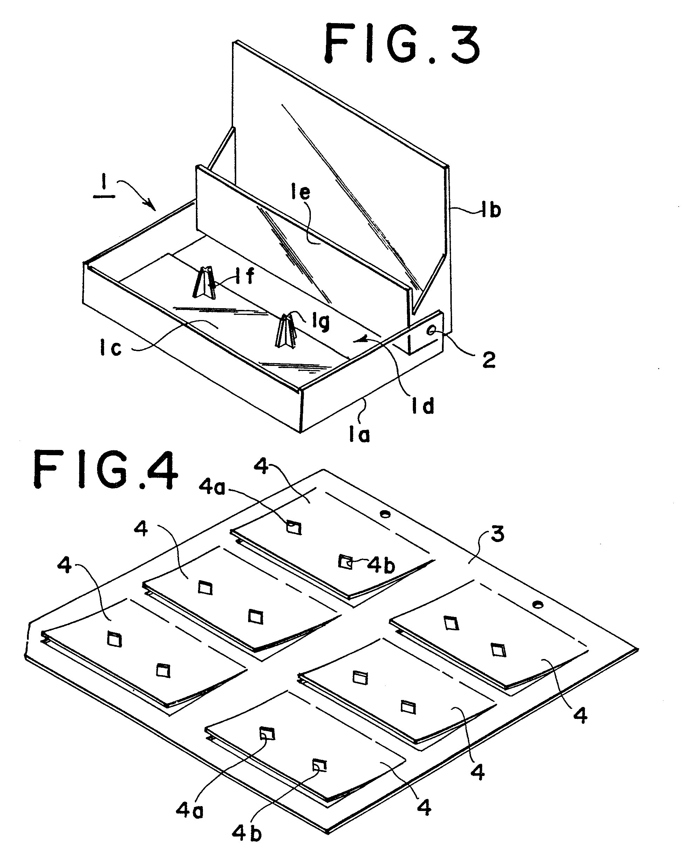

Fig. 4 shows an embodiment wherein the tongue pieces 4 are formed by punching the base plate 3. In this case, naturally, a flexible material is used for the base plate 3 and further, as required, the other parts than the tongue pieces 4 of the base plate 3 are pasted to another cardboard or the like.

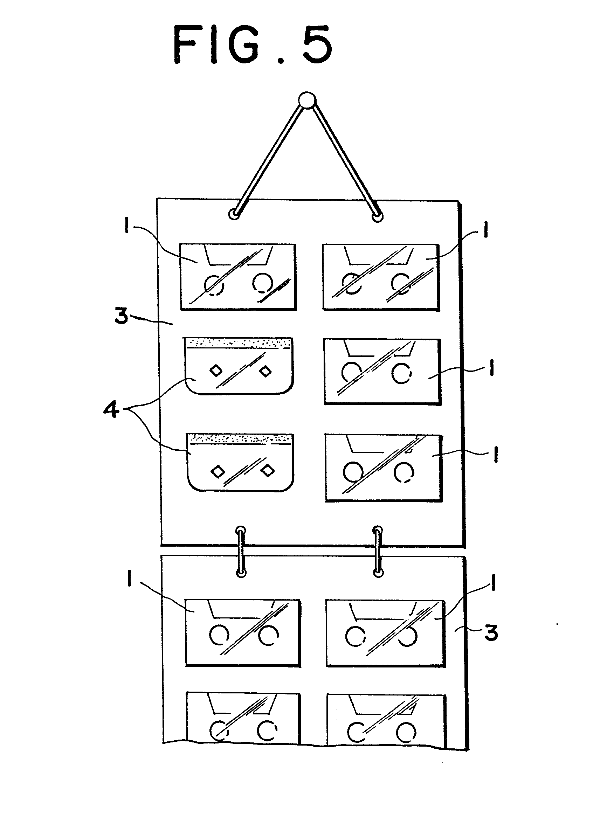

Fig. 5 shows cassette tape holders displayed at a store.

In this case, the same as in the above description, when the lid 1b of the case 1 is opened, the cassette tape T will be lifted together with the lid 1b, the tongue piece 4 will be able to be easily removed from the positioning projections 1f and 1g provided on the bottom surface 1c of the case body 1a and the cassette tape T as contained in the case will be able to be handed over to a client.

- 6 -

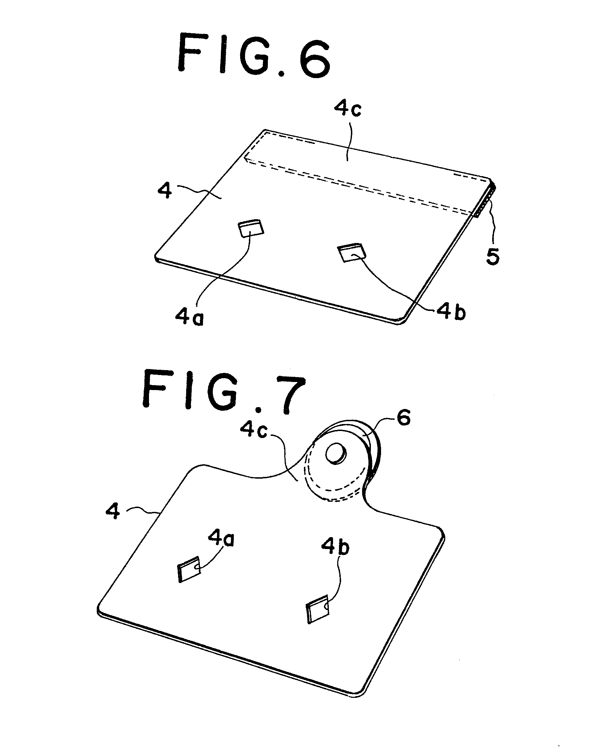

Fig. 6 shows a cassette tape holder to be hung and supported on a wall surface within a room or car.

That is to say, the upper part of the tongue piece 4 is made a supporting part 4c on the back surface of which a pressure sensitive bonding agent layer 5 is provided so that the cassette tape holder can be hung on any thing.

In the above mentioned formation, if the pressure sensitive bonding agent layer 5 of the above mentioned supporting part 4c is pasted to a wall surface or the like within a room or car and the cassette tape holder is used the same as in Fig. 4, the cassette tape T together with the case 1 will be completely locked and hung so as not to be pulled off by vibration or the like.

Fig. 7 shows an embodiment wherein a sucker 6 is provided in the supporting part 4c in the upper part of the tongue piece 4 and which can be used in the same manner as in Fig. 6.

As mentioned above, according to the present invention, there can be obtained effects that cassette tapes as contained respectively in cases can be very simply arranged, the cassette tapes only can be simply taken out, an entire holder can be formed of one plate,

- 7 -

the cassette tape holder is simple to make, is in the form of a thin plate, is not bulky, is not costly to transport and will be able to be provided cheaply even in case it is in the form of an album or is displayed at a store.

ORIGINAL

ORIGINAL

### Claim

1.    A cassette tape holder provided with flexible tongue pieces each inserted into a cassette tape case through an opening on the bottom surface of the case body and having holes engaging respectively with positioning projections provided on the bottom surface of the above mentioned case body.

ORIGINAL

FIG. 1

# FIG. 2

ORIGINAL

0134733

# FIG.3

# FIG.4

ORIGINAL

# FIG.5

ORIGINAL

# FIG.6

# FIG.7

ORIGINAL

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-1 586 162 (GARROD & LOFTHOUSE) * Page 1, line 57 - page 2, line 11; figures 1-3 * | 1 | G 11 B 23/023 |
| A | GB-A-2 030 545 (DOUGLAS PACKAGING SERVICES) | | |

TECHNICAL FIELDS SEARCHED (Int. Cl. ³)

A 47 F 7/24
B 65 D 85/672
G 11 B 23/00

The present search report has been drawn up for all claims

| Place of search | Date of completion of the search | Examiner |
|---|---|---|
| BERLIN | 05-10-1984 | KUEHN E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82